# EUROPEAN PATENT SPECIFICATION

(11) **EP 3 058 298 B1**
(45) Date of publication and mention of the grant of the patent: **27.05.2020**
(21) Application number: 14781638.3
(22) Date of filing: 01.10.2014
(51) Int. Cl.: F26B 3/02, F26B 23/00

(54) **DRYING APPARATUS AND METHOD OF DRYING MATERIAL**
TROCKNUNGSVORRICHTUNG UND VERFAHREN ZUM TROCKNEN VON MATERIAL
APPAREIL ET PROCÉDÉ DE SÉCHAGE DE MATÉRIAU

(30) Priority: 16.10.2013 GB 201318333
(43) Date of publication of application: 24.08.2016
(73) Proprietor: Spirax-Sarco Limited, Cheltenham, Gloucestershire GL53 8ER (GB)
(72) Inventor: FRISBY, Ben, Cheltenham Gloucestershire GL51 9NQ (GB); MILLER, Jeremy, Cheltenham Gloucestershire GL51 9NQ (GB)
(74) Representative: Haseltine Lake Kempner LLP
(86) International application number: PCT/GB2014/052976
(87) International publication number: WO 2015/055982

(56) References cited:
- DE-A1- 3 240 611
- FR-A1- 2 785 372

## Description

The invention relates to a drying apparatus and a method of drying material. In particular, the invention relates to a drying apparatus having a heat reclaimer having a heat pump, and a method of drying material comprising reclaiming heat from a fraction of extracted steam.

It is known to dry material, such as foodstuffs, using a steam dryer. Typically, steam is allowed to flow through a steam dryer such that material within the dryer is in direct or indirect contact with the steam. The steam is superheated steam and causes vapour to evaporate from the material in the dryer and combine with the steam flow. Steam exiting the dryer can be re-heated in a heat exchanger and re-circulated to the dryer.

US 5,291,668 discloses both indirect and direct contact steam drying systems in which steam recirculated through a dryer is heated using a heat exchanger. A portion of the steam exiting the dryer is compressed to provide the heat source for the heat exchanger. Compressing the steam generates a heat of compression and a latent heat of evaporation that can be transferred to the recirculating steam in order to re-heat it.

FR 2 785 372, which discloses in combination the features of the preambles of claim 1 and of claim 10, discloses a method and an installation for drying a textile mass, in particular applied to wet clothes after washing. The method comprises: passing overheated water vapour through the textile mass located in a drying zone so as to extract by evaporation from the textile mass the moisture contained therein in the form of water vapour; recuperating the condensation heat of the water vapour extracted from the textile mass to produce, at least partly, said overheated water vapour.

DE 32 40 611 discloses a tunnel drier for drying continuous lengths of material which is operated with superheated steam or with a steam-rich steam-gas mixture. The drying channel is for this purpose made essentially gastight and is provided at its inlet side and its outlet side with respective lock zones. The medium emerging from the drying channel through an outlet duct is fed back again via a return duct to the inlet side of the drying channel, only the quantity of steam taken out of the length of material being removed from the circuit. The heat contained in this steam is partially taken out of the exhaust steam by a heat pump and is used for heating the heating medium flowing back to its operating temperature. The energy consumption of the drying plant and the load on the environment are thus considerably reduced.

Whilst previously considered drying apparatus and methods may be satisfactory, it may be desirable to provide a more efficient apparatus and method.

The invention is defined in the attached independent claims to which reference should now be made. Further, optional features are defined in the sub-claims appended thereto.

According to an aspect of the invention there is provided a drying apparatus in accordance with claim 1.

The condenser may form part of the drying circuit. The condenser may have a heat source side and a heat sink side, and the heat sink side may form part of the drying circuit. The evaporator may have a heat source side and a heat sink side, and the heat source side may form part of the extraction line.

In use, the dryer may remove vapour from the material to be dried which may combine with the working steam in the drying circuit. In use, the amount of steam extracted from the drying circuit through the extraction line may relate to the amount of vapour removed from the material to be dried.

An extraction flow rate at which steam is extracted from the drying circuit may substantially correspond to an average vapour extraction rate at which vapour is extracted from material to be dried in the dryer.

The drying apparatus may further comprise a control valve for controlling the amount of steam extracted from the drying circuit through the extraction line. The control valve may control the extraction flow rate of steam extracted from the drying circuit through the extraction line. The control valve may be a pressure-dependent control valve arranged to adjust the extraction flow rate according to the pressure of the steam. The pressure-dependent control valve may be responsive to the pressure of the working steam in the drying circuit and/or the pressure of the extracted steam in the extraction line.

The drying apparatus may further comprise a valve controller for controlling the valve so as to set the extraction flow rate of steam extracted from the drying circuit through the extraction line.

The fraction of steam may be extracted from the drying circuit upstream of the condenser.

The extraction flow rate may be set at least partly based on one or more of: the mass flow rate of working steam in the drying circuit, the velocity flow rate of working steam in the drying circuit, the pressure of the working steam in the drying circuit and/or the target working steam range. The extraction flow rate may be predetermined.

The valve controller may be configured to set the extraction flow rate such that in use the amount of working steam recirculating in the drying circuit is substantially maintained within a target range. The target range may be predetermined. The target range may be set at least partly based on the amount of material to be dried that is received in the dryer or at least partly based on an intake rate at which material to be dried is introduced into the dryer.

The drying apparatus may further comprise a pressure sensor for generating a pressure signal relating to the pressure of working steam in the drying circuit. The valve controller may be configured to set the extraction flow rate based at least partly on the pressure signal.

The evaporator may form part of the extraction line.

The heat pump may comprise a heat pump compressor and an expansion valve. The heat reclaimer comprise a pre-pump compressor disposed upstream of the heat pump for compressing the extracted steam in the extraction line.

The heat reclaimer comprises a de-superheater disposed downstream of the pre-pump compressor and upstream of the heat pump. The de-superheater may have a heat source side forming part of the extraction line and a heat sink side forming part of the drying circuit. The de-superheater may be arranged to transfer heat to working steam in the drying circuit. The de-superheater may transfer heat to the working steam upstream of the condenser and/or downstream of where a fraction of steam is extracted from the drying circuit.

There may also be provided a temperature sensor disposed upstream of the condenser for generating an upstream temperature signal relating to the temperature of the working steam in the drying circuit. The heat reclaimer may be configured to control the transfer of heat to the working steam based at least partly on the upstream temperature signal. There may also be provided a flow meter disposed in the drying circuit for generating a flow rate signal relating to the flow rate of the working steam in the drying circuit. The heat reclaimer may be configured to control the transfer of heat to the working steam based at least partly on the flow rate of the working steam. The heat reclaimer may be configured to control the heat transfer to the working steam by adjusting the compression ratio associated with the pre-pump compressor and/or the heat pump compressor where present. The amount of heat transferred to the working steam may be controlled at least partly by adjusting the extraction flow rate at which steam is extracted from the drying circuit.

The heat pump may be arranged to circulate a process fluid between the evaporator and the compressor. The heat pump may further comprise a surge tank for providing a buffer source of process fluid. The surge tank may contain both gaseous process fluid and liquid process fluid.

The drying apparatus may further comprise an auxiliary heat exchanger arranged to transfer heat to working steam in the drying circuit. The auxiliary heat exchanger may transfer heat to working steam in the drying circuit from an auxiliary heat source. For example, the auxiliary heat exchanger may be used to heat fluid circulating in the drying circuit during a start-up phase of operation of the drying apparatus.

The drying apparatus may further comprise an auxiliary steam inlet such that auxiliary steam can be injected into the drying circuit. For example, an initial quantity of steam may be injected into the drying circuit during a start-up phase of operation of the drying apparatus.

According to a further aspect of the invention there is provided a method of drying material in accordance with claim 10.

The amount of steam extracted from the drying circuit may relate to the amount of vapour removed from the material to be dried.

An extraction flow rate at which steam is extracted from the drying circuit may substantially correspond to an average vapour extraction rate at which vapour is extracted from material to be dried in the dryer.

The method may further comprise controlling the amount of steam extracted from the drying circuit. The method may further comprise controlling the extraction flow rate of steam extracted from the drying circuit. The extraction flow rate may be controlled at least partly based on one or more of the pressure of the working steam in the drying circuit and the pressure of the extracted steam.

The method may further comprise setting the extraction flow rate of steam extracted from the drying circuit. The extraction flow rate may be set at least partly based on one or more of: the mass flow rate of working steam in the drying circuit, the velocity flow rate of working steam in the drying circuit, the pressure of the working steam in the drying circuit and/or the target working steam range. The extraction flow rate may be predetermined.

The extraction flow rate may be set such that the amount of working steam recirculating in the drying circuit is substantially maintained within a target range. The target range may be predetermined. The target range may be set at least partly based on the amount of material to be dried that is received in the dryer or based on an intake rate at which material to be dried is received in the dryer.

The method may further comprise generating a pressure signal relating to the pressure of working steam in the drying circuit. The extraction flow rate may be set at least partly based on the pressure signal.

The method comprises compressing the extracted steam upstream of the heat pump. The method comprises de-superheating the compressed extracted steam upstream of the heat pump. De-superheating the compressed extracted steam may comprise transferring heat from the compressed extracted steam to working steam in the drying circuit. The heat may be transferred to the working steam upstream of the condenser.

The method may further comprise generating an upstream temperature signal relating to the temperature of the working steam upstream of the condenser. The method may further comprise generating a flow rate signal corresponding to the flow rate of working steam in the drying circuit.

The step of controlling the transfer of heat to the working steam in the drying circuit using the condenser may be at least party based on the upstream temperature signal and/or the flow rate of the working steam.

Controlling the transfer of heat to the working steam in the drying circuit using the condenser may comprise adjusting the compression ratio associated with the pre-pump compressor and/or the heat pump compressor. The amount of heat transferred to the working steam may be controlled at least partly by adjusting the extraction flow rate at which steam is extracted from the drying circuit.

Embodiments of the invention will now be described, by way of example, with reference to the accompanying drawings, in which:
Figure 1 schematically shows a drying apparatus according to an embodiment of the invention; and
Figure 2 schematically shows a heat pump of the drying apparatus of Figure 1.

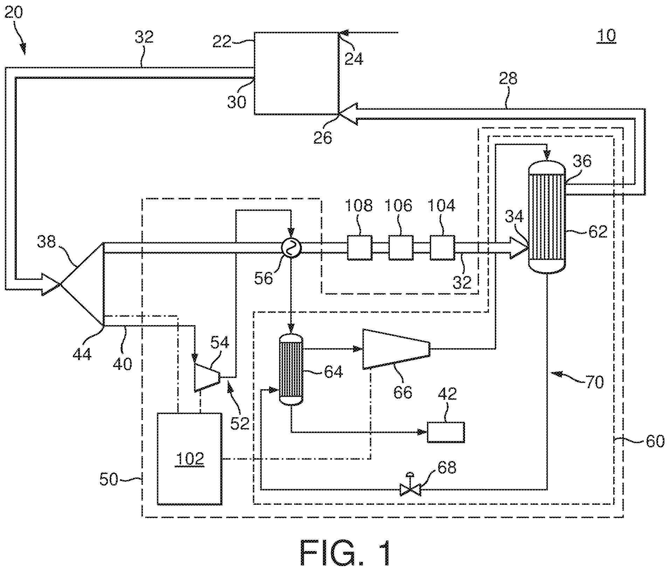

**Figure 1** shows a drying apparatus 10 comprising a drying circuit 20 having a dryer 22, an extraction line 40 and a heat reclaimer 50 including a heat pump 60. The drying apparatus 10 also comprises a control system 100 which can be used to control the operation of the drying apparatus. In use, material to be dried, such as a foodstuff, is introduced into the dryer 22 and working steam is recirculated within the drying circuit 20 so that it flows through the dryer 22. In the dryer 22, vapour is evaporated from the material to be dried and this vapour combines with the working steam. A fraction of steam is extracted from the drying circuit 20 through the extraction line 40 and the heat reclaimer 50 recovers heat from steam extracted from the drying circuit through the extraction line and transfers heat to the working steam in the drying circuit 20.

The dryer 22 has an intake 24 through which material to be dried, such as foodstuffs, can be introduced, a steam inlet 26 connected to a steam supply line 28, and a steam outlet 30 connected to a steam recirculation line 32. In this embodiment, the dryer 22 is a direct contact dryer in which working steam is in direct contact with the material to be dried.

As will be described in more detail below, the steam recirculation line 32 is connected to a heat sink inlet 34 of a condenser 62 of a heat pump 60, and the steam supply line 28 is connected to a heat sink outlet 36 of the condenser 62.

Thus, the dryer 22, steam recirculation line 32, condenser 62 and steam supply line 28 form the drying circuit 20 within which working steam can be recirculated.

An extraction valve 44 is disposed in the recirculation line 32 between the dryer 22 and the condenser 62. The extraction line 40 is fluidically coupled to the extraction valve 44 such that a fraction of steam can be extracted from the drying circuit 20. The extraction valve 44 is for controlling the amount of steam extracted through the extraction line 40.

The heat reclaimer 50 comprises a re-compression system 52 and a heat pump 60. The re-compression system 52 comprises a pre-pump compressor 54 disposed in the extraction line 40 for compressing extracted steam in the extraction line 40, and a de-superheater 56. The de-superheater 56 is arranged to transfer heat from compressed extracted steam in the extraction line 40 (compressed by the pre-pump compressor 54) to working steam in the drying circuit 20 so as to reduce the degree to which the compressed extracted steam is superheated. The de-superheater 56 has a heat source side forming part of the extraction line 40 downstream of the pre-pump compressor 54 and a heat sink side forming part of the steam recirculation line 32 downstream of the extraction valve 44. Therefore, the de-superheater 56 also forms part of the drying circuit 20.

The heat pump 60 comprises the condenser 62 (briefly described above), an evaporator 64, a main compressor 66 and an expansion valve 68. These components are coupled together to form a closed process circuit 70.

The condenser 62 has a heat sink side forming part of the drying circuit 20 (as described above), a heat source side forming part of the process circuit 70, and is configured to transfer heat therebetween. The evaporator 64 has a heat source side forming part of the extraction line 40 and a heat sink side forming part of the process circuit 70 and is configured to transfer heat therebetween. The extraction line 40 extends from the evaporator 64 to a drain 42. The main compressor 66 is disposed between the evaporator 64 and the condenser 62 and arranged to compress gaseous process fluid in the process circuit 70, such as a refrigerant, received from the evaporator 64. The expansion valve is disposed between the condenser 62 and the evaporator 64 and is arranged to expand the process fluid received from the condenser 62 (i.e. by reducing its pressure).

Thus, the heat pump 60 is arranged to circulate the process fluid through the process circuit 70 so as to transfer heat from the extracted steam in the extraction line 40 to working steam in the drying circuit 20.

The control system 100 comprises a valve controller 102 and a number of sensors disposed throughout the drying apparatus for monitoring various parameters of the drying apparatus. The control system 100 includes a temperature sensor 104 disposed in the steam recirculation line 32 upstream of the condenser 62 for generating a signal relating to the temperature of the working steam in the drying circuit 20. Further temperature sensors are disposed in the extraction line 40 upstream of the pre-pump compressor 54, upstream of the evaporator 64 and downstream of the evaporator 64. Temperature sensors are also disposed in the process circuit 70 upstream of the condenser 62 and upstream of the evaporator 64.

The control system 100 also includes a flow meter 106 disposed in the recirculation line 32 for generating a flow rate signal relating to the mass flow rate of working steam in the drying circuit 20, and a pressure sensor 108 disposed in the recirculation line 32 for generating a pressure signal relating to the pressure of the working steam in the drying circuit 20.

The extraction valve 44 is controlled by a controller 102 which sets the extraction flow rate at which steam is extracted through the extraction line 40.

The main compressor 66 may also be controlled by the controller 102 to adjust the flow rate of the process fluid circulating in the process circuit 70. However, in other embodiments, a separate pump may be provided, and may or may not be controlled by the controller 102. The compression ratios of the pre-pump compressor 56 and main compressor 66 may also be individually controllable by the controller 102.

A method of drying material, such as a foodstuff, using the drying apparatus 10 shown in Figure 1 will now be described. In the following description, exemplary flow rates, pressures and temperatures are given to illustrate possible usage of the drying apparatus 10. These values are examples only, and are selected to illustrate certain regions of superheated steam and saturated steam respectively. However, it will be appreciated that in other embodiments these values may change, and may lead to different steam conditions. For example, in other embodiments the working steam exiting the dryer may not be superheated.

In use, 20,000 kg per hour of working steam is circulated in the drying circuit 20 at atmospheric pressure through the dryer 22, the recirculation line 32, the de-superheater 56, the condenser 62 and the steam supply line 28. The heat reclaimer 50 is controlled by the control system 100 such that the condenser 62 re-heats the working steam exiting the dryer 22 to superheated steam conditions before it is returned to the dryer 22. As such, the working steam entering the dryer 22 from the supply line 28 is superheated, typically at around 170°C.

Material to be dried, such as foodstuffs, is placed in the dryer 22 either periodically or continuously by a continuous feed mechanism. Moisture within the material to be dried is extracted from the material as vapour under direct contact with the superheated working steam, and combines with the superheated working steam within the dryer 22 at a vapour extraction rate of 1,000 kg per hour. Depending on the temperature, quantity and moisture content of the material to be dried within the dryer 22 and the flow rate of working steam in the drying circuit 20, the working steam may remain superheated when it exits the dryer 22, or may become dry saturated steam, or may partially condense to form wet steam. In this example, the working steam leaves the dryer 22 superheated at 110°C and at atmospheric pressure (10°C superheat).

The working steam exits the dryer 22 through the outlet 30 and flows through the recirculation line 32. A fraction of the working steam is extracted from the drying circuit 20 through the extraction line 40 by opening the extraction valve 44. The extraction flow rate is set by the controller 102. In this embodiment, the controller 102 sets the extraction flow rate to correspond to the vapour extraction flow rate, i.e. at 1,000 kg per hour. The remainder of the working steam (20,000 kg per hour) flows to the condenser 62 where it is re-heated to superheated conditions.

The extracted steam from the drying circuit 20 flows through the extraction line 40 and through the heat reclaimer 50. The extracted steam is compressed by the pre-pump compressor 56, which raises its pressure and temperature to 1 bar gauge and 160°C respectively (approximately 40°C superheat).

Typically, the pressure and temperature of the extracted steam are raised by the pre-pump compressor 56 to a level such that the compressed extracted steam downstream of the pre-pump compressor 56 is superheated. However, it is desirable for the extracted steam to be saturated, as opposed to superheated, when it enters the evaporator 64 in order to achieve a maximum rate of heat transfer within the evaporator 64. Accordingly, the de-superheater 58 provided downstream of the pre-pump compressor 56 reduces the temperature of the compressed extracted steam to the saturation temperature. The compressed extracted steam flows through the heat source side of the de-superheater 58 and heat is transferred from the compressed extracted steam to the heat sink side of the de-superheater 58 which forms part of the recirculation line 32 of the drying circuit 20. Consequently, the temperature of the working steam flowing within the recirculation line 32 is slightly increased (to approximately 115°C) by the de-superheater, and the temperature of the extracted steam in the extraction line 40 is reduced to approximately 120°C, which is the saturation temperature at a pressure of 1 bar gauge.

The extracted steam flows from the de-superheater 58 into the heat source side of the evaporator 64 where its heat of compression and latent heat of evaporation is transferred to the process fluid flowing through the heat sink side of the evaporator 64. Typically, the heat reclaimer 50 is controlled such that the pressure of the process fluid entering the heat sink side of the evaporator 64 is sufficiently low to maximise the heat transferred from the extracted steam. Accordingly, the extracted steam fully condenses in the heat source side of the evaporator 64 and is subsequently expanded to form condensate water at 100°C and atmospheric pressure. The condensate water then flows from the evaporator 64 through the extraction line 40 to the drain 42.

In the process circuit 70, process fluid enters the heat sink side of the evaporator 64 at low pressure (0.9 bar gauge) and at a temperature below that of the extracted steam in the heat source side of the evaporator (approximately 119°C). Heat is transferred to the process fluid from the extracted steam as described above, and the heated process fluid evaporates in the heat sink side of the evaporator 64, leaving as a gas.

Gaseous process fluid flows from the evaporator 64 to the main compressor 66 at a temperature of 119°C and a pressure of 0.9 bar gauge. The main compressor 66 compresses the process fluid so that it leaves at a pressure of 9 bar gauge and a temperature of approximately 180°C. The compressed process fluid enters the heat source side of the condenser 62, where it condenses to transfer its heat of compression and latent heat of evaporation to the working steam flowing in the heat sink side of the condenser 62. Consequently, the temperature of the working steam flowing through the heat sink side of the condenser 62 is raised to superheated conditions (170°C).

Condensed process fluid flows from the condenser at 180°C and a pressure of 9 bar gauge. The process fluid flows through the expansion valve 68 and undergoes expansion, leaving at 119°C and at a pressure of 0.9 bar gauge as a mixed phase flow. The process fluid flows back to the heat sink side of the evaporator 64, completing the cycle.

The control system 100 controls the drying apparatus 10 so as to recover heat from excess steam extracted from the drying circuit 20, and to transfer this heat back to the working steam in the drying circuit 20. Once the working steam within the drying circuit 20 is up to the desired temperature, the energy required to recover and transfer this heat is the energy required to operate the pre-pump compressor 56 and the main compressor 66.

The heat reclaimer 50 including the heat pump 60 has a high Coefficient of Performance (COP) since it allows the heat of compression and latent heat of evaporation of the extracted steam to be recovered using mechanical work only, even though it is at a lower temperature than the desired re-heat temperature of the working steam entering the dryer 22 (which is 170°C in the above example).

The control system 100 is configured to control the various components of the drying apparatus 10 to cope with a variable intake rate of material to be dried. For example, if the intake rate of material to be dried is increased, it may be necessary to increase the flow rate of working steam in the drying circuit 20 to cope with the additional material, and also to increase the extraction flow rate of steam from the drying circuit 20 to maintain a constant quantity of working steam in the drying circuit 20.

The compression ratio of the pre-pump compressor 56 can be controlled to adjust the pressure of the extracted steam entering the evaporator 64. For example, an increase in the pressure of the extracted steam entering the evaporator 64 would be associated with a corresponding increase in temperature, and therefore an increase in the rate of heat transfer from the extracted steam to the process fluid in the evaporator 64.

Similarly, the compression ratio of the main compressor 66 can be adjusted to control the performance of the heat pump 60. For example, an increase in the compression ratio will increase the pressure and temperature of the process fluid in the heat source side of the condenser 62, and thereby increase the rate of heat transfer to the working steam in the heat sink side of the condenser 62.

Further, the extraction flow rate can be adjusted independently of the vapour extraction rate so as to put more or less steam from the drying circuit 20 through the heat reclaimer 50. For example, the extraction flow rate could be temporarily increased to allow more heat to be recovered and transferred back to working steam in the drying circuit 20.

The above controllable variables (compression ratio, extraction flow rate) can be independently controlled by the controller 102 in response to changes in the drying apparatus monitored by the control system 100. For example, the control system 100 may detect that the temperature of the working steam exiting the condenser 62 has dropped and therefore the heat transfer from the heat reclaimer 50 to the working steam should be increased. Alternatively, the control system 100 may detect that the pressure in the drying circuit 20 or the mass flow rate in the drying circuit 20 has increased (for example, due to an increase in the vapour extraction rate from the material to be dried), and therefore the extraction flow rate should be increased to maintain a desired quantity of working steam in the drying circuit.

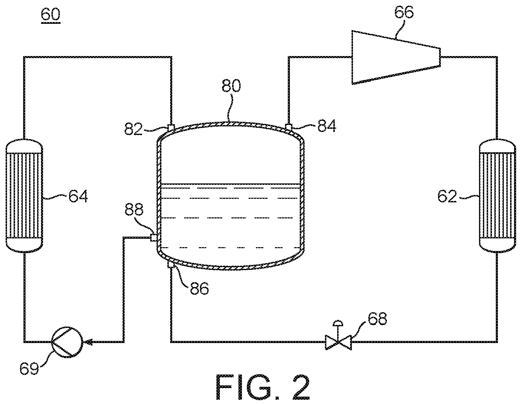

In an alternative embodiment shown in **Figure 2****,** the heat pump 60 of the heat reclaimer 50 includes a surge tank 80 which provides a buffer source of process fluid. The surge tank 80 may be disposed in parallel with either the evaporator 64 or the condenser 62, and in the example embodiment shown in Figure 2 is in parallel with the evaporator 64. Accordingly, the surge tank 80 has a gas inlet 82 for receiving evaporated process fluid from the evaporator 64, and a gas outlet 84 for providing evaporated process fluid to the main compressor 66. The surge tank 80 also comprises a liquid inlet 86 for receiving expanded process fluid from the expansion valve 68, and a liquid outlet 88 for providing expanded process fluid to the evaporator 64. In this embodiment, the heat pump 60 further comprises a pump 69 disposed between the surge tank 80 and the evaporator for driving process fluid around the process circuit 70.

In use, the surge tank 80 is typically part-filled with gaseous process fluid and part filled with liquid process fluid, with a free surface therebetween. The surge tank 80 therefore allows for the flow rate of process fluid to be altered in any part of the process circuit 70 in response to an increase or decrease in heat transfer demand. For example, if there is demand for increased heat transfer in the condenser 62 to the working steam, the buffer supply of gaseous process fluid may be drawn upon without first having to increase the flow rate of condensed process fluid into the evaporator 64. This buffer supply of gaseous process fluid represents a store of latent heat of evaporation which can be drawn upon rapidly. Similarly, the buffer supply of liquid process fluid represents a store of a heat sink, ready to receive the latent heat of evaporation and heat of compression from extracted steam flowing through the heat source side of the evaporator 64.

In alternative embodiments, the drying apparatus is provided with an auxiliary heat exchanger and/or an auxiliary steam inlet. The auxiliary heat exchanger is arranged to transfer heat to working steam in the drying circuit from an auxiliary heat source. The auxiliary heat exchanger can be used to re-heat working steam in the drying circuit in the event that sufficient heat cannot be recovered and transferred from the fraction of extracted steam from the drying circuit.

The auxiliary steam inlet is formed in the drying circuit and is arranged such that an auxiliary steam flow can be injected into the drying circuit. One particular use of the auxiliary steam inlet is to provide an initial amount of steam in the drying circuit during a start-up phase of operation of the drying apparatus.

The heat reclaimer, including the heat pump, allows heat to be efficiently recovered from excess steam extracted from the drying circuit for re-heating working steam in the drying circuit, despite the desired temperature of the working steam in the dryer (170°C in the above example) being higher than the temperature of the extracted steam (110°C in the above example). Whilst known mechanical vapour recompression systems could be used to increase the temperature and pressure of the steam extracted from the drying circuit, thereby enabling heat to be transferred therefrom to recirculating working steam via a standard heat exchanger, the efficiency of such systems is limited because the temperature of the re-compressed extracted steam must always be higher than the temperature of the working steam in order to effect heat transfer. Consequently, significant re-compression is required to raise the temperature, especially for a steam drying apparatus using significantly superheated steam.

However, the heat reclaimer in the invention includes a heat pump which allows heat to be transferred from relatively low-temperature extracted steam (whether compressed or not) to a process fluid in the low-pressure side of the heat pump. The process fluid is then compressed and its temperature thereby increased so as to effect heat transfer in the high-pressure side of the heat pump to the relatively high-temperature working steam in the drying circuit. The energy used to compress the process fluid in the heat pump is less than would be required to re-compress the extracted steam itself to a sufficiently high pressure and temperature that would enable heat to be transferred therefrom to the relatively high temperature working steam in the drying circuit 20.

Further, the heat reclaimer including the heat pump has benefits over known mechanical vapour recompression systems with regard to the resilience of the equipment. As described above, known mechanical vapour recompression systems rely on re-compressing the relatively low temperature extracted steam to a sufficiently high pressure and temperature that enables heat to be transferred therefrom to relatively high temperature working steam. The compressor must therefore be capable of effecting a large compression ratio. Further, the compressor operates on extracted steam which may contain particles from the material within the dryer. The compressor must therefore be resilient to damage from such particles, which can be expensive to design for and may require expensive materials or components. Further, the compressor may have to accommodate saturated steam or steam which is only marginally superheated, especially if it is required to output saturated steam (i.e. for efficient heat transfer in a heat exchanger). Accordingly, the compressor is susceptible to damage from condensate within the extracted steam, particularly in regions of low pressure which may cause even marginally superheated steam to condense. Again, compressors which are resilient to such damage can be expensive, both to design and in terms of the cost of suitable materials.

However, the heat reclaimer of the invention including the heat pump may have a pre-pump compressor that is not required to compress the extracted steam to such an extent that its temperature is raised to be higher than that of the working steam. Further still, the pre-pump compressor, is not required to output saturated steam for efficient heat transfer in a heat exchanger since the de-superheater is provided to de-superheat the steam. Accordingly, the pre-pump compressor may operate to compress only superheated steam, which may be less damaging to moving compressor parts.

The damage-resistance demands on the pre-pump compressor may be limited, as described above, owing to the provision of the heat pump in the heat reclaimer. The main compressor of the heat pump carries out a significant portion or the entirety of the mechanical work in the heat reclaimer. In the example given above, the main compressor increases the pressure of the process fluid from 0.9 bar gauge to 9 bar gauge, whereas the pre-pump compressor only increases the pressure of the extracted steam from 1 atmosphere to 1 bar gauge. The main compressor is not susceptible to damage from particles entrained in the working steam or from the steam itself because it operates on the process fluid circulating in the closed process circuit, which is separate from the working steam and the extracted steam. Accordingly, the heat reclaimer described may use a relatively inexpensive compressor for the heat pump, and a relatively inexpensive pre-pump compressor.

Whilst embodiments of the invention have been described in which the drying apparatus comprises a direct-type dryer in which steam is in direct contact with material to be dried, it will be appreciated that in other embodiments the dryer may be a combination type dryer in which heat is transferred into a drying chamber from an external steam jacket by conduction, and a separate portion of steam enters the drying chamber in direct contact with the material to be dried. In such an embodiment, the vapour extracted from the material to be dried combines with the portion of steam within the dryer.

Although embodiments of the invention have been described in which the drying apparatus is controlled by a control system, it will be appreciated that in other embodiments all or a part of the drying apparatus may be manually controlled.

## Claims

1. A drying apparatus (10), comprising:
a drying circuit (20) within which working steam can be recirculated;
a dryer (22) for receiving material to be dried and forming part of the drying circuit (20) so that in use working steam flows through the dryer (22);
an extraction line (40) in fluid communication with the drying circuit (20) for extracting a fraction of steam from the drying circuit (20); and
a heat reclaimer (50) comprising a heat pump (60) having an evaporator (64) arranged to recover heat from extracted steam in the extraction line (40) and a condenser (62) arranged to transfer heat to working steam in the drying circuit;
**characterised by** further comprising:
a pre-pump compressor (54) disposed upstream of the heat pump (60) for compressing extracted steam in the extraction line (40); and
a de-superheater (56) disposed downstream of the pre-pump compressor (54) and upstream of the heat pump (60).

2. A drying apparatus (10) according to claim 1, further comprising a control valve (44) for controlling the amount of steam extracted from the drying circuit (20) through the extraction line (40), wherein the control valve (44) controls the extraction flow rate of steam extracted from the drying circuit (20) through the extraction line (40).

3. A drying apparatus (10) according to claim 2, further comprising a valve controller (102) for controlling the control valve (44) so as to set the extraction flow rate of steam extracted from the drying circuit (20) through the extraction line (40).

4. A drying apparatus (10) according to claim 3, wherein the valve controller (102) is configured to set the extraction flow rate such that in use the amount of working steam recirculating in the drying circuit (20) is substantially maintained within a target range.

5. A drying apparatus (10) according to claims 3 or 4, further comprising a pressure sensor (108) for generating a pressure signal relating to the pressure of working steam in the drying circuit (20), and wherein the valve controller (102) is configured to set the extraction flow rate based at least partly on the pressure signal.

6. A drying apparatus (10) according to any one of the preceding claims, wherein the heat pump (60) further comprises a heat pump compressor (66) and an expansion valve (68).

7. A drying apparatus (10) according to claim 6, wherein the heat pump (60) is arranged to circulate a process fluid between the evaporator (64) and the compressor (66), and wherein the heat pump (60) further comprises a surge tank (80) for providing a buffer source of process fluid.

8. A drying apparatus (10) according to claim 7, wherein the surge tank (80) contains both gaseous process fluid and liquid process fluid.

9. A drying apparatus (10) according to any preceding claim, wherein the de-superheater (56) is arranged to transfer heat to working steam in the drying circuit (20).

10. A method of drying material, comprising:
introducing material to be dried into a dryer (22);
recirculating working steam in a drying circuit (20) which is partly formed by the dryer (22) causing working steam to flow through the dryer (22), thereby resulting in vapour being removed from the material in the dryer (22) which combines with the working steam in the drying circuit (20);
extracting a fraction of steam from the drying circuit (20);
recovering heat from the extracted steam using an evaporator (64) of a heat pump (60); and
transferring heat to working steam in the drying circuit (20) with a condenser (62) of the heat pump (60); **characterised by**:
compressing the extracted steam upstream of the heat pump (60); and
de-superheating the compressed extracted steam upstream of the heat pump (60).

11. A method according to claim 10, further comprising controlling the extraction flow rate of steam extracted from the drying circuit (20).

12. A method according to claim 11, further comprising setting the extraction flow rate of steam extracted from the drying circuit (20).

13. A method according to claim 12, wherein the extraction flow rate is set such that the amount of working steam recirculating in the drying circuit (20) is substantially maintained within a target range.

14. A method according to claim 12 or 13, further comprising generating a pressure signal relating to the pressure of working steam in the drying circuit (20), and wherein the extraction flow rate is set at least partly based on the pressure signal.

15. A method according to any of claims 10 to 14, wherein de-superheating the compressed extracted steam comprises transferring heat from the compressed extracted steam to working steam in the drying circuit (20).

## Patentansprüche

1. Trocknungsvorrichtung (10), umfassend:
einen Trocknungskreislauf (20), in dem Nutzdampf rückgeführt werden kann;
einen Trockner (22) zum Aufnehmen von zu trocknendem Material, der Bestandteil des Trocknungskreislaufs (20) ist, sodass im Einsatz Nutzdampf durch den Trockner (22) strömt;
eine mit dem Trocknungskreislauf (20) in Fluidverbindung stehende Entnahmeleitung (40) zum Entnehmen eines Dampfanteils aus dem Trocknungskreislauf (20); und
einen Wärmerekuperator (50), der eine Wärmepumpe (60) mit einem Verdampfer (64), der dazu angeordnet ist, Wärme aus Dampf, der in der Entnahmeleitung (40) entnommen wird, zurückzugewinnen, und einem Kondensator (62), der dazu angeordnet ist, Wärme auf Nutzdampf im Trocknungskreislauf zu übertragen, umfasst;
**dadurch gekennzeichnet, dass** sie ferner Folgendes umfasst:
einen Vorpumpenverdichter (54), der stromaufwärts der Wärmepumpe (60) angeordnet ist, zum Verdichten von in der Entnahmeleitung (40) entnommenem Dampf und
einen Enthitzer (56), der stromabwärts des Vorpumpenverdichters (54) und stromaufwärts der Wärmepumpe (60) angeordnet ist.

2. Trocknungsvorrichtung (10) nach Anspruch 1, ferner umfassend ein Steuerventil (44) zum Steuern der Menge von Dampf, der aus dem Trocknungskreislauf (20) durch die Entnahmeleitung (40) entnommen wird, wobei das Steuerventil (44) den Entnahmedurchsatz von Dampf, der aus dem Trocknungskreislauf (20) durch die Entnahmeleitung (40) entnommen wird, steuert.

3. Trocknungsvorrichtung (10) nach Anspruch 2, ferner umfassend eine Ventilsteuerung (102) zum Steuern des Steuerventils (44), um den Entnahmedurchsatz von Dampf, der aus dem Trocknungskreislauf (20) durch die Entnahmeleitung (40) entnommen wird, einzustellen.

4. Trocknungsvorrichtung (10) nach Anspruch 3, wobei die Ventilsteuerung (102) dazu gestaltet ist, den Entnahmedurchsatz so einzustellen, dass im Einsatz die Menge von Nutzdampf, der im Trocknungskreislauf (20) rückgeführt wird, im Wesentlichen in einem Sollbereich gehalten wird.

5. Trocknungsvorrichtung (10) nach Anspruch 3 oder 4, ferner umfassend einen Drucksensor (108) zum Erzeugen eines Drucksignals, das sich auf den Druck des Nutzdampfs im Trocknungskreislauf (20) bezieht, und wobei die Ventilsteuerung (102) dazu ausgelegt ist, den Entnahmedurchsatz zumindest teilweise basierend auf dem Drucksignal einzustellen.

6. Trocknungsvorrichtung (10) nach einem der vorangehenden Ansprüche, wobei die Wärmepumpe (60) ferner einen Wärmepumpenverdichter (66) und ein Expansionsventil (68) umfasst.

7. Trocknungsvorrichtung (10) nach Anspruch 6, wobei die Wärmepumpe (60) dazu angeordnet ist, ein Prozessfluid zwischen dem Verdampfer (64) und dem Verdichter (66) zirkulieren zu lassen, und wobei die Wärmepumpe (60) ferner einen Ausgleichsbehälter (80) zum Bereitstellen einer Pufferquelle von Prozessfluid umfasst.

8. Trocknungsvorrichtung (10) nach Anspruch 7, wobei der Ausgleichsbehälter (80) sowohl gasförmiges Prozessfluid als auch flüssiges Prozessfluid enthält.

9. Trocknungsvorrichtung (10) nach einem der vorangehenden Ansprüche, wobei der Enthitzer (56) dazu angeordnet ist, Wärme auf Nutzdampf im Trocknungskreislauf (20) zu übertragen.

10. Verfahren zum Trocknen von Material, umfassend:
Einführen von zu trocknendem Material in einen Trockner (22);
Rückführen von Nutzdampf in einem Trocknungskreislauf (20), der teilweise durch den Trockner (22) ausgebildet ist, wodurch der Nutzdampf dazu veranlasst wird, durch den Trockner (22) zu strömen, wodurch aus dem Material im Trockner (22) Dampf entfernt wird, der sich mit dem Nutzdampf im Trocknungskreislauf (20) verbindet;
Entnehmen eines Dampfanteils aus dem Trocknungskreislauf (20);
Rückgewinnen von Wärme aus dem entnommenen Dampf unter Verwendung eines Verdampfers (64) einer Wärmepumpe (60) und
Übertragen von Wärme auf Nutzdampf im Trocknungskreislauf (20) mit einem Kondensator (62) der Wärmepumpe (60); **gekennzeichnet durch**:
Verdichten des entnommenen Dampfs stromaufwärts der Wärmepumpe (60) und
Enthitzen des verdichteten entnommenen Dampfs stromaufwärts der Wärmepumpe (60).

11. Verfahren nach Anspruch 10, ferner umfassend das Steuern des Entnahmedurchsatzes von Dampf, der aus dem Trocknungskreislauf (20) entnommen wird.

12. Verfahren nach Anspruch 11, ferner umfassend das Einstellen des Entnahmedurchsatzes von Dampf, der aus dem Trocknungskreislauf (20) entnommen wird.

13. Verfahren nach Anspruch 12, wobei der Entnahmedurchsatz so eingestellt ist, dass die Menge an Nutzdampf, der im Trocknungskreislauf (20) rückgeführt wird, im Wesentlichen in einem Sollbereich gehalten wird.

14. Verfahren nach Anspruch 12 oder 13, ferner umfassend das Erzeugen eines Drucksignals, das sich auf den Druck von Nutzdampf im Trocknungskreislauf (20) bezieht, und wobei der Entnahmedurchsatz zumindest teilweise basierend auf dem Drucksignal eingestellt wird.

15. Verfahren nach einem der Ansprüche 10 bis 14, wobei das Enthitzen des verdichteten entnommenen Dampfs das Übertragen von Wärme vom verdichteten entnommenen Dampf auf Nutzdampf im Trocknungskreislauf (20) umfasst.

## Revendications

1. Appareil de séchage (10), comprenant :
un circuit de séchage (20) à l'intérieur duquel de la vapeur de travail peut recirculer ;
un sécheur (22) pour recevoir de la matière à sécher et faisant partie du circuit de séchage (20) de telle sorte que, pendant l'utilisation, de la vapeur de travail s'écoule à travers le sécheur (22) ;
une ligne d'extraction (40) en communication fluidique avec le circuit de séchage (20) pour extraire une fraction de la vapeur provenant du circuit de séchage (20) ; et
un récupérateur de chaleur (50) comprenant une pompe à chaleur (60) ayant un évaporateur (64) prévu pour récupérer de la chaleur à partir de la vapeur extraite dans la ligne d'extraction (40) et
un condenseur (62) prévu pour transférer de la chaleur à la vapeur de travail dans le circuit de séchage ;
**caractérisé en ce qu'**il comprend en outre :
un compresseur pré-pompe (54) disposé en amont de la pompe à chaleur (60) pour comprimer la vapeur extraite dans la ligne d'extraction (40) ; et
un dé-surchauffeur (56) disposé en aval du compresseur pré-pompe (54) et en amont de la pompe à chaleur (60).

2. Appareil de séchage (10) selon la revendication 1, comprenant en outre une soupape de régulation (44) pour réguler la quantité de vapeur extraite du circuit de séchage (20) à travers la ligne d'extraction (40), la soupape de régulation (44) régulant le débit d'extraction de la vapeur extraite du circuit de séchage (20) à travers la ligne d'extraction (40).

3. Appareil de séchage (10) selon la revendication 2, comprenant en outre un dispositif de commande de soupape (102) pour commander la soupape de commande (44) de manière à régler le débit d'extraction de la vapeur extraite du circuit de séchage (20) à travers la ligne d'extraction (40).

4. Appareil de séchage (10) selon la revendication 3, dans lequel le dispositif de commande de soupape (102) est configuré pour réguler le débit d'extraction de telle sorte que pendant l'utilisation, la quantité de vapeur de travail en recirculation dans le circuit de séchage (20) soit substantiellement maintenue à l'intérieur d'une plage cible.

5. Appareil de séchage (10) selon la revendication 3 ou 4, comprenant en outre un capteur de pression (108) pour générer un signal de pression associé à la pression de la vapeur de travail dans le circuit de séchage (20) et dans lequel le dispositif de commande de soupape (102) est configuré pour réguler le débit d'extraction sur la base au moins en partie du signal de pression.

6. Appareil de séchage (10) selon l'une quelconque des revendications précédentes, dans lequel la pompe à chaleur (60) comprend en outre un compresseur de pompe à chaleur (66) et une soupape d'expansion (68).

7. Appareil de séchage (10) selon la revendication 6, dans lequel la pompe à chaleur (60) est prévue pour faire circuler un fluide de traitement entre l'évaporateur (64) et le compresseur (66) et dans lequel la pompe à chaleur (60) comprend en outre un réservoir de débordement (80) pour fournir une source tampon de fluide de traitement.

8. Appareil de séchage (10) selon la revendication 7, dans lequel le réservoir de débordement (80) contient à la fois du fluide de traitement gazeux et du fluide de traitement liquide.

9. Appareil de séchage (10) selon l'une quelconque des revendications précédentes, dans lequel le dé-surchauffeur (56) est prévu pour transférer de la chaleur à la vapeur de travail dans le circuit de séchage (20).

10. Procédé de séchage de matière, comprenant :
l'introduction de matière à sécher dans un sécheur (22) ;
la recirculation de vapeur de travail dans un circuit de séchage (20) qui est en partie formé par le sécheur (22), pour amener la vapeur de travail à s'écouler à travers le sécheur (22), pour ainsi entraîner l'extraction de vapeur de la matière dans le sécheur (22), qui se combine avec la vapeur de travail dans le circuit de séchage (20) ;
l'extraction d'une fraction de la vapeur provenant du circuit de séchage (20) ;
la récupération de chaleur à partir de la vapeur extraite en utilisant l'évaporateur (64) d'une pompe à chaleur (60) ; et
le transfert de chaleur à la vapeur de travail dans le circuit de séchage (20) avec un condenseur (62) de la pompe à chaleur (60) ;
**caractérisé par** :
la compression de la vapeur extraite en amont de la pompe à chaleur (60) ; et
le dé-surchauffage de la vapeur extraite comprimée en amont de la pompe à chaleur (60).

11. Procédé selon la revendication 10, comprenant en outre la régulation du débit d'extraction de la vapeur extraite du circuit de séchage (20).

12. Procédé selon la revendication 11, comprenant en outre le réglage du débit d'extraction de la vapeur extraite du circuit de séchage (20).

13. Procédé selon la revendication 12, dans lequel le débit d'extraction est réglé de telle sorte que la quantité de vapeur de travail en recirculation dans le circuit de séchage (20) soit substantiellement maintenue à l'intérieur d'une plage cible.

14. Procédé selon la revendication 12 ou 13, comprenant en outre la génération d'un signal de pression associé à la pression de la vapeur de travail dans le circuit de séchage (20), et dans lequel le débit d'extraction est réglé au moins en partie sur la base du signal de pression.

15. Procédé selon l'une quelconque des revendications 10 à 14, dans lequel le dé-surchauffage de la vapeur extraite comprimée comprend le transfert de la chaleur de la vapeur extraite comprimée à la vapeur de travail dans le circuit de séchage (20).
